# EUROPÄISCHE PATENTANMELDUNG

(11) **EP 1 072 462 A2**
(43) Veröffentlichungstag der Anmeldung: **31.01.2001**
(21) Anmeldenummer: 00115963.1
(22) Anmeldetag: 26.07.2000
(51) Int. Cl.: B60L 15/20

(54) **Verfahren zur Begrenzung der Maximalbeschleunigung eines Fahrzeugs**

(30) Priorität: 30.07.1999 DE 19935872
(71) Anmelder: ZF FRIEDRICHSHAFEN Aktiengesellschaft, 88038 Friedrichshafen (DE)
(72) Erfinder: Wolfgang, Werner, 88213 Ravensburg (DE); Voss, Thomas, 88069 Tettnang (DE); Hellwig, Bert, 88045 Friedrichshafen (DE); Müller, Bernd, 88046 Friedrichshafen (DE); Karch, Gerald, Dr., 88045 Friedrichshafen (DE)

(57) **Zusammenfassung**

Das Verfahren zur Begrenzung der Maximalbeschleunigung eines mit einem Elektroantrieb versehenen Fahrzeugs, insbesondere eines Stadtbusses, als Funktion des Fahrzeuggewichts sowie der Steigungsverhältnisse der befahrenen Straße besteht darin, daß das vom Elektroantrieb abgegebene Drehmoment mittels eines Reglers derart eingestellt wird, daß einerseits das vollbeladene Fahrzeug eine vorgegebene Anfahrsteigfähigkeit aufweist und andererseits eine vorgegebene Maximalbeschleunigung des weitgehend leeren Fahrzeugs in der Ebene oder bei Bergabfahrt nicht überschritten wird.

## Beschreibung

Die vorliegende Erfindung betrifft ein Verfahren zur Begrenzung der Maximalbeschleunigung eines mit einem Elektroantrieb versehenen Fahrzeugs, insbesondere eines Stadtbusses, als Funktion des Fahrzeuggewichts sowie der Steigungsverhältnisse der befahrenen Straße.

Fahrzeuge mit einem Elektroantrieb kommen insbesondere dann zum Einsatz, wenn ein Schadstoffausstoß vermieden werden soll. Dies ist insbesondere in Fabrikhallen und in Gemeinden bzw. Städten nicht nur bei Smoggefahr erwünscht. In manchen Gemeinden sind ganze Bereiche nur noch für Fahrzeuge mit Elektroantrieb zugelassen, wobei insbesondere Stadtbusse mit derartigen elektrischen Antrieben versehen werden.

Als Energiequelle für den Elektroantrieb kommen dabei beispielsweise Dieselgeneratoren, Akkumulatoren oder Brennstoffzellen in Frage, an die Elektromotore angeschlossen sind, welche die Räder des Kraftfahrzeuges antreiben. Als Elektromotoren für herkömmliche Fahrzeuge mit Elektroantrieb eignen sich Drehstrommotoren, deren Drehzahl leicht steuerbar ist.

Ein Problem bei Kraftfahrzeugen mit einem Elektromotor, unabhängig von welcher Energiequelle der Motor angetrieben wird, ist darin zu sehen, daß der Elektroantrieb eine maximale zulässige Beschleunigung nicht überschreiten darf. Insbesondere bei Stadtbussen, bei denen die Fahrgäste oftmals während des Transports stehen, existiert nun die Forderung, daß aus Sicherheits- und Komfortgründen bestimmte Maximalbeschleunigungen des Fahrzeugs nicht überschritten werden dürfen. Die aus dein abgegebenen Drehmoment des Elektroantriebs resultierende Maximalbeschleunigung des Fahrzeugs hängt jedoch einerseits vom Gewicht des Fahrzeugs und damit von der Anzahl der aktuell transportierten Personen sowie andererseits von den Steigungsverhältnissen der Straße ab.

Aufgabe der vorliegenden Erfindung ist es, ein Verfahren zur Begrenzung der Maximalbeschleunigung eines mit einem Elektroantrieb versehenen Fahrzeugs, insbesondere eines Stadtbusses, zu schaffen, als Funktion des Fahrzeuggewichts sowie der Steigungsverhältnisse der befahrenen Straße.

Die Lösung dieser Aufgabe erfolgt mit den im Anspruch 1 angegebenen Merkmalen; vorteilhafte Ausgestaltungen sind in den Unteransprüchen beschrieben.

Das erfindungsgemäße Verfahren eignet sich sowohl für Kraftfahrzeuge mit einem Elektroantrieb als auch für Hybridfahrzeuge während des Serien-Hybridbetriebs als auch für den Parallel-Hybridbetrieb während des alleinigen Einsatzes ihres Elektromotors, d. h. bei abgeschaltetem Verbrennungsmotor. Es sieht also vor, daß das vom Elektroantrieb abgegebene Drehmoment mittels eines Reglers derart eingestellt wird, daß einerseits das vollbeladene Fahrzeug eine vorgegebene Anfahrsteigfähigkeit aufweist und andererseits eine vorgegebene Maximalbeschleunigung des weitgehend leeren Fahrzeugs in der Ebene oder bei Bergabfahrt nicht überschritten wird.

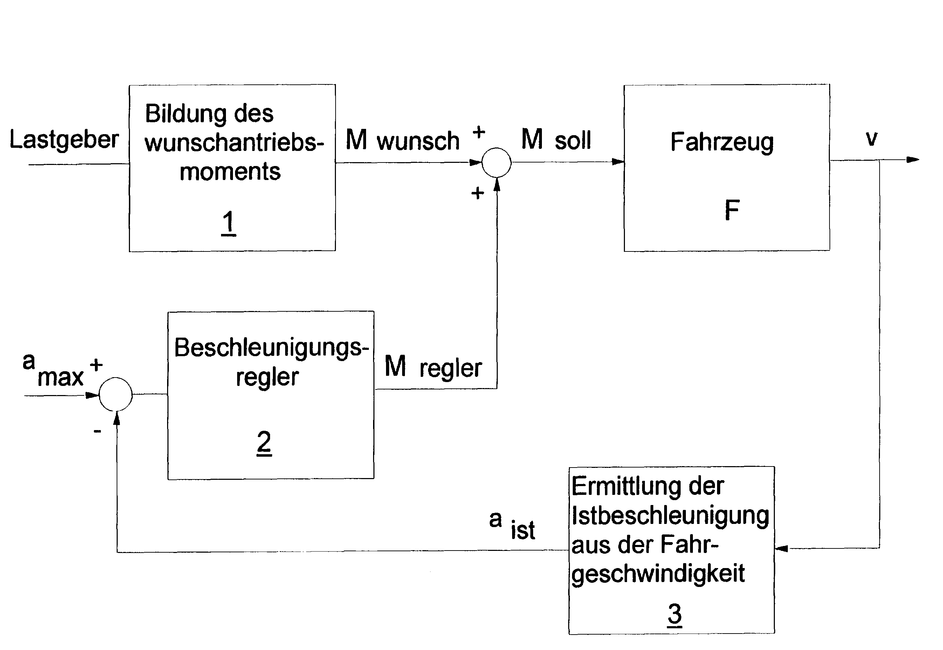

Im folgenden wird die Erfindung anhand der einzigen Figur näher erläutert, wobei in dein Blockschaltbild das erfindungsgemäße Verfahren zur Begrenzung der Maximalbeschleunigung schematisch dargestellt ist.

Von einem nicht dargestellten Lastgeber wird einem ersten Schaltkreis 1 ein Signal zugeführt, wobei in diesem Schaltkreis das Wunschantriebsmoment **M**_{wunsch} gebildet wird. Einem Regler 2, der als PI-Regler ausgestaltet ist, wird als Eingangsgröße die Differenz zwischen der gewünschten Maximalbeschleunigung aₘₐₓ und der aus der Drehzahl durch einen Schaltkreis 3 ermittelten Ist-Beschleunigung aᵢₛₜ zugeführt. Da der Regler nur eine Überschreitung der Maximalbeschleunigung für das Fahrzeug F verhindern soll, dessen Vorwärtsgeschwindigkeit mit v angedeutet ist, wird das Ausgangssignal des PI-Reglers 2 auf negative Signalwerte **M**_{regler} begrenzt. Durch eine Summation des Ausgangssignals des PI-Reglers 2 mit dem aus der Fahrzeugstrategie ermittelten Sollwert für das Drehmoment **M**ₛₒₗₗ wird letzteres soweit begrenzt, daß unabhängig von den Steigungsverhältnissen und dem Beladungszustand des Fahrzeugs, das insbesondere ein Stadtbus ist, eine vorgegebene Maximalbeschleunigung nicht überschritten wird.

### Bezugszeichen

- 1: Schaltkreis
- 2: Regler
- 3: Schaltkreis
- 4: Fahrzeug

## Patentansprüche

1. Verfahren zur Begrenzung der Maximalbeschleunigung eines mit einem Elektroantrieb versehenen Fahrzeugs, insbesondere eines Stadtbusses, als Funktion des Fahrzeuggewichts sowie der Steigungsverhältnisse der befahrenen Straße, dadurch **gekennzeichnet**, daß das vom Elektroantrieb abgegebene Drehmoment mittels eines Reglers derart eingestellt wird, daß einerseits das vollbeladene Fahrzeug eine vorgegebene Anfahrsteigfähigkeit aufweist und andererseits die vorgegebene Maximalbeschleunigung des weitgehend leeren Fahrzeug in der Ebene oder bei Bergabfahrt nicht überschritten wird.

2. Verfahren nach Anspruch 1, dadurch **gekennzeichnet,** daß dem Regler, der als PI-Regler ausgestaltet ist, als Eingangsgröße die Differenz zwischen der vorgegebenen Maximalbeschleunigung und der aus der Drehzahländerung des Elektroantriebs berechneten Ist-Beschleunigung zugeführt wird und daß das Ausgangssignal des PI-Reglers auf negative Signalwerte begrenzt wird.

3. Verfahren nach Ansprüchen 1 und 2, dadurch **gekennzeichnet,** daß durch Summation des Ausgangssignals des Reglers mit dem aus der Fahrstrategie ermittelten Sollwert des Drehmoments dieses auf die vorgegebene Maximalbeschleunigung begrenzt wird.
